# EUROPEAN PATENT SPECIFICATION

(11) **EP 0 759 603 B1**
(45) Date of publication and mention of the grant of the patent: **13.03.2002**
(21) Application number: 96305986.0
(22) Date of filing: 16.08.1996
(51) Int. Cl.: G08G 1/09

(54) **Route guide system and method**
Routenführungssystem und -verfahren
Système et méthode de guidage routier

(30) Priority: 18.08.1995 JP 20982895
(43) Date of publication of application: 26.02.1997
(73) Proprietor: AGENCY OF INDUSTRIAL SCIENCE AND TECHNOLOGY, Tokyo 100 (JP)
(72) Inventor: Akamatsu, Motoyuki, Tsukuba-shi, Ibaraki 305 (JP)
(74) Representative: Beresford, Keith Denis Lewis

(56) References cited:
- EP-A- 0 454 443
- EP-A- 0 615 022
- WO-A-93/09524
- DE-A- 3 822 222
- DE-A- 3 905 493

## Description

This invention relates to a route guide system and method using a route guide apparatus provided on a vehicle and a road guide station provided on the route.

For reaching an unknown targeted location or destination by an automobile, a route guide apparatus is proposed which provides guidance to the targeted location in order to ensure the objective destination is reached. This apparatus is provided on board a vehicle, and has therein map information. Further, when the apparatus is instructed with a destination in advance, the apparatus calculates a shortest route to the destination according to the map information. When the vehicle starts travelling towards the destination, a map of the vicinity of the present position is displayed on a display screen of the apparatus and, when the vehicle comes up to a crossroad or a turning point, a route is displayed by an arrow or the like in the map on the display screen. With such a route guide apparatus, the driver is released from a burden of stopping the vehicle to see a map.

However, when the vehicle approaches the crossroads or the turning point, the driver must turn his eyes from the travelling direction to the guide screen of the route guide apparatus. This is dangerous for the driver. For example, at this moment, if a pedestrian runs out to the road, a hazardous thing falls out from another vehicle, or a preceding vehicle suddenly brakes, this may lead to an accident.

EP-A-0615022 discloses a method and system for guiding a vehicle along a route in which a route guide apparatus is provided in a vehicle. The route guide apparatus provides displayed directions to a driver by transmitting an image onto the windscreen of the vehicle.

An object of the present invention is to provide a route guide system and method which can provide road guidance without requiring the driver to turn their eyes from the direction of travel.

In accordance with the first aspect the present invention provides a method of guiding a vehicle along a route, the method comprising:
providing a route guide apparatus in the vehicle; and
using the route guide apparatus to provide displayed directions to a driver of the vehicle when the vehicle is in the vicinity of a road junction to provide guidance to a target destination;
characterised in that:
a road guide display is arranged in the vicinity of said road junction and visible to the driver and displays direction by emitting light of different types for different directions; and
the route guide apparatus provides the displayed directions to the driver by controlling optical means to selectively let through light of one of said different types emitted by said road guide display to be visible to the driver.

In accordance with the second aspect the present invention provides a route guide system comprising:
a route guide apparatus for mounting on a vehicle and comprising optical means for providing displayed directions to a driver of the vehicle when the vehicle is in the vicinity of a road junction to provide guidance to a target destination;
characterised by:
a road guide display for arrangement in the vicinity of said road junction to be visible to the driver to display directions, said road guide display being adapted to emit light of different types for different directions to display said directions; and
in that said route guide apparatus includes control means for controlling said optical means to selectively let through light of one of said different types emitted by said road guide display to be visible to the driver.

Here, optical means may be a liquid crystal shutter, the light-emitting pattern can be light-emitting timing, and the liquid crystal shutter can pass through a specific light according to the light emitting timing.

The liquid crystal shutter can be disposed on a front glass of the vehicle.

The liquid crystal shutter can be formed in the form of sunglasses wearable by the driver of the vehicle.

The optical means can be a polarizing filter capable of varying the polarization direction, the route guide display can emit light of different polarization direction and the polarizing filter can allow light having a specific polarization direction to pass through.

The polarizing filter can be disposed on a front glass of the vehicle.

The polarizing filter can be formed in the form of sunglasses wearable by the driver of the vehicle.

A synchronizing signal for controlling the road guide display can be transmitted from a ground station to the route guide apparatus, whereby a light pass timing of the optical means is controlled by the synchronizing signal.

With respect to the light pass timing of the optical means, a ground station for controlling the road guide display and the route guide apparatus individually may have clocks for achieving synchronism.

According to the present invention, it is not required for the driver to see the display screen of the route guide apparatus unit as required in the prior art, thereby preventing disturbance to the driving manipulation of the driver.

Embodiments of the present invention will now be described with reference to the accompanying drawings, in which:
Fig. 1 is a block diagram showing the system arrangement of a first embodiment of the present invention;
Fig. 2A is a diagram of the road guide display of the first embodiment of the present invention;
Fig. 2B is a schematic view showing correspondence between the running direction information and the light-emitting pattern in the first embodiment of the present invention;
Fig. 3 is a flowchart showing processing in the first embodiment of the present invention; and

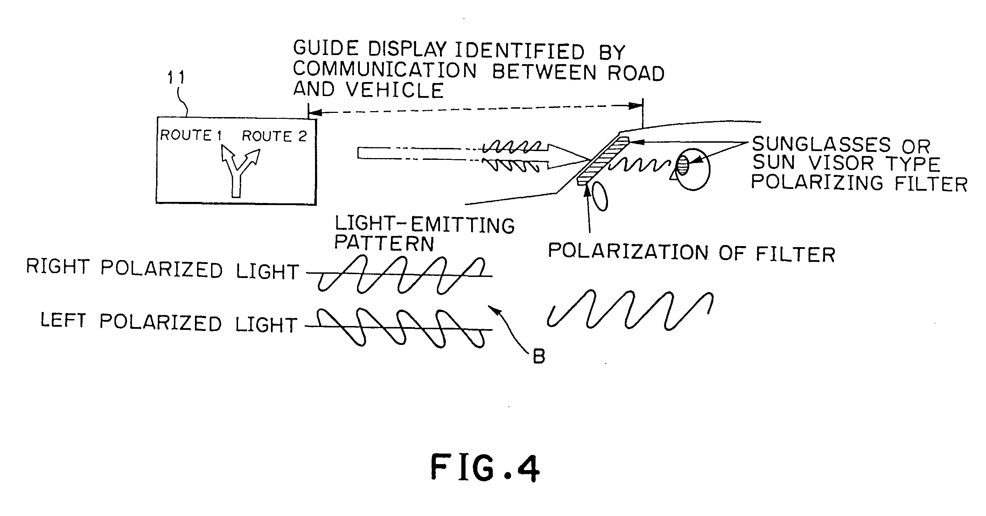

Fig. 4 is a schematic view showing a light-emitting pattern in a third embodiment of the present invention.

Preferred embodiments of the present invention will be described in detail with reference to the drawings.

### First Embodiment

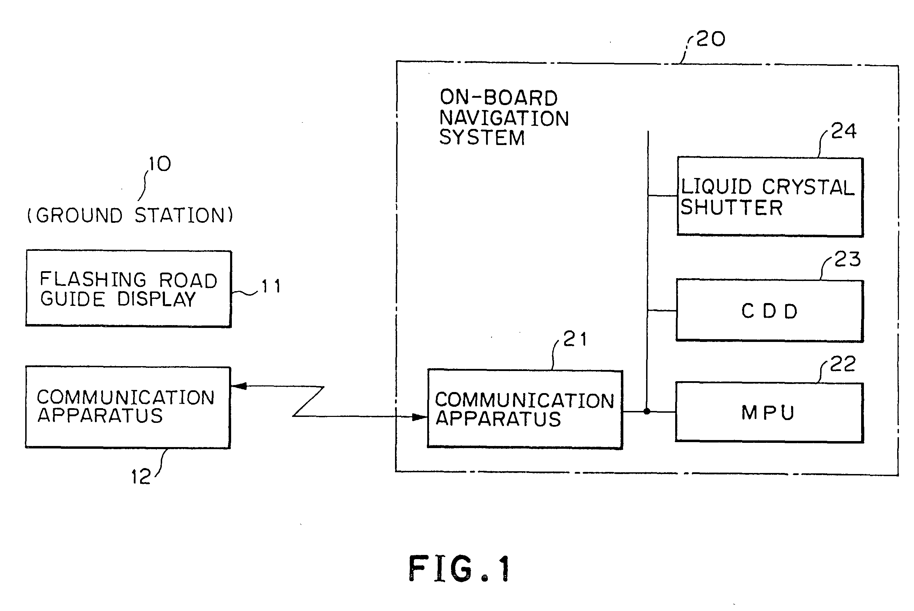

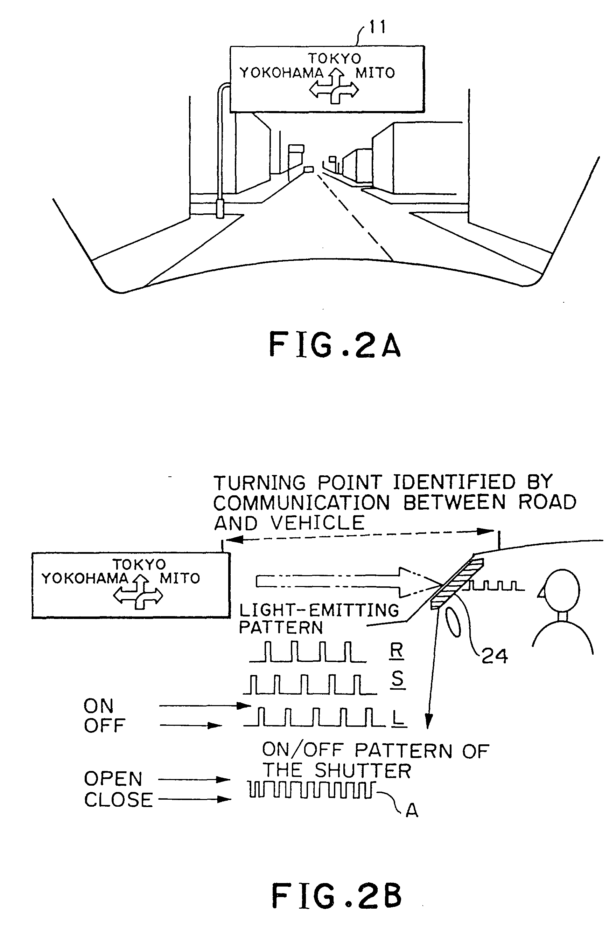

Fig. 1 shows the system arrangement of a first embodiment of the present invention. In Fig. 1, reference numeral 10 indicates a ground station set up on the ground, which comprises a communication apparatus 12 for communicating between a flashing road guide display 11 and an on-board type road guide apparatus (hereinafter referred to as navigation system) 20. The flashing road guide display 11 emits light in a predetermined light-emitting pattern. That is, there are various light-emitting patterns which are different in flash timing, according to the travelling direction, as shown in Fig. 2B. The road guide display 11 is set up in the vicinity of a crossroads so that it is visible by the driver of a travelling vehicle. The communication apparatus 12 transmits a synchronizing signal showing its location information and the timing of the above light-emitting pattern in compliance with the request from the navigation system 20.

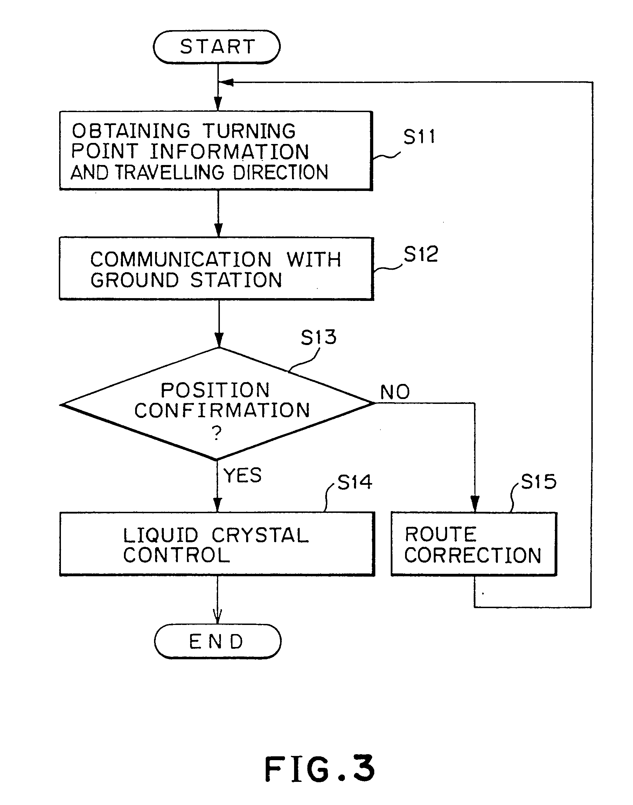

The navigation system 20 comprises a communication apparatus 21, a microprocessor (MPU) 22, a CD (compact disk) drive (CDD) 23, and a liquid crystal shutter 24. The communication apparatus 21 performs communication with the communication apparatus 12 of the ground station 10. The content of communication between the communication apparatuses 12 and 21 is positional information of the ground station. The MPU 22 controls the entire system and also calculates travelling direction information to provide a route guide. Since the calculation can be performed by various methods well known in the prior art, detailed description thereof is omitted. The MPU further executes the control procedure as shown in Fig. 3 to control the liquid crystal shutter 24, and the road guide display 11 is seen by the driver to indicate the travelling direction as shown in Figs. 2A and 2B. The CD in which the map information is stored is inserted in the CDD 23.

The liquid crystal shutter 24, as shown in Fig. 2B, is disposed on the front glass of the vehicle to perform a shuttering operation so that flashing light for the direction instructed by the MPU 22, that is, flashing light from the road guide display 11 is passed through, and flashing light for an uninstructed direction is not allowed to pass through. More specifically, when the route guide information indicates the direction right, for example, the liquid crystal shutter 24 is operated ON/OFF at the timing A in Fig. 2B. When the liquid crystal shutter 24 is ON, flashing light indicating the direction right from the road guide plate 11 passes through the liquid crystal shutter 24. Further, background light other than from the road guide display 11 also passes through. The background and the flashing light indicating the direction right from the road guide display 11 are thus visible to the driver. Therefore, the driver feels as if the road guide display 11 provides road guidance.

A control procedure of the MPU 22 for making such road guidance is shown in Fig. 3. This control procedure is stored in the form of an executable program in the MPU 22. The present location obtained by present location detection processing is compared with turning point information obtained from the map information by the MPU 22 to determine whether the vehicle has reached a point to provide travelling direction guidance. If travelling direction guidance is to be given, the MPU 22 executes the processing of Fig. 3. The MPU 22 receives the positional information from the ground station 10 through the communication 21 (step S11 & S12). Then, the present location obtained by a route guide processing using a conventional method known in the prior art is compared with the position obtained from the ground station to confirm that the vehicle is travelling in the vicinity of the turning point (step S13). When it is confirmed that the vehicle is travelling in the vicinity of the turning point, the MPU 22 controls the liquid crystal shutter by the above method according to the travelling direction at the turning point obtained by a method similar to the prior art.

On the other hand, when the positional information from the ground station 10 does not coincide with the positional information obtained from the guidance processing, the present positional information used in the guidance processing is corrected to the exact positional information obtained from the ground station 10, and guidance processing is carried out again. After this correction, when it is confirmed that the vehicle is near the turning point, the above processing is carried out again (step S15 & S11).

When the vehicle is not in the vicinity of the turning point, the liquid crystal shutter may be controlled to be normally ON (normally passing light).

### Second Embodiment

While the liquid crystal shutter 24 is disposed on the front glass of the vehicle in the first embodiment, the liquid crystal shutter may alternatively be provided in the form of sunglasses wearable by the driver of the vehicle.

### Third Embodiment

Although the first and second embodiments use a liquid crystal shutter as a means for passing through light from the road guide plate, alternatively, a polarizing filter capable of changing the polarization direction can be disposed on the front glass of the vehicle or used in the form of the sunglasses in place of the liquid crystal shutter. In this case, for example, right polarized light emitted by the road guide display 11, indicates the direction right, and left polarized light emitted by the road guide display 11 indicates the direction left. It is needless to say that the MPU 22 controls the polarization direction of the filter so that it passes light indicating the travelling direction according to the travelling information of the vehicle.

In addition to the above described embodiments, the following embodiment can be used.
1) In the above embodiments, a synchronizing signal is transmitted from the ground station 10 so that the liquid crystal shutter 24 passes through flashing light of the desired travelling direction. However, when both the ground station 10 and the navigation system 20 have clocks that can measure absolute time, the operation timing of the liquid crystal shutter 26 may be determined by this clock.
2) In order for the navigation system 20 itself to grasp the position of the vehicle during running, a GPS (global position system) using a communication satellite and a method in which the travelling distance is integrated and compared with a map are known, and either method can be used. Further, it is advantageous to describe the positions of the road guide displays described in the above embodiments in the map information. This enhances the detection accuracy of running position by comparing with the positional information from the ground station when detecting the present position of the vehicle at the navigation system 20 side, or can determine necessity of displaying the travelling direction by the liquid crystal shutter 24.
3) Since the road guide display used on a freeway or the like often is bifurcated, the third embodiment is preferable which uses the polarizing filter. For general roads, the first embodiment is preferable which uses the liquid crystal shutter.
4) While embodiments have been shown which dispose a liquid crystal shutter and/or a polarizing filter on the front glass of the vehicle to notify the travelling direction to the driver, or use them in the form of the sunglasses. The optical means may be provided on the front face of a helmet. In either case, a tool may be used which makes the road guide display 11 visible to the driver, and the present invention is not limited to the above embodiments.
5) Normally, the travelling direction is indicated by the liquid crystal shutter 24 in the direction instructed from the navigation system 20, but when an unusual situation occurs, for example, the road of the travelling direction is closed due to a traffic accident or the like, the instruction from the ground station 10 can be used in preference to indicate the travelling direction. In this case, information showing the priority of the instruction from the ground station 10 is transmitted from the ground station 10 to the navigation system 20. The navigation system invalidates its own travelling direction information, and controls the liquid crystal shutter 24 using the travelling direction information instructed from the ground station 10.

## Claims

1. A method of guiding a vehicle along a route, the method comprising:
providing a route guide apparatus (20) in the vehicle; and
using the route guide apparatus (20) to provide displayed directions to a driver of the vehicle when the vehicle is in the vicinity of a road junction to provide guidance to a target destination;
**characterised in that**:
a road guide display (11) is arranged in the vicinity of said road junction and visible to the driver and displays directions by emitting light of different types for different directions; and
the route guide apparatus (20) provides the displayed directions to the driver by controlling optical means (24) to selectively let through light of one of said different types emitted by said road guide display (11) to be visible to the driver.

2. A method according to claim 1, including receiving positional information in said route guide apparatus (20) from a ground station including said road guide display (11), wherein the directions displayed to the driver are selected in accordance with the received positional information and route guide information obtained from map information.

3. A method according to claim 1 or claim 2 wherein the light emitted by said road guide display (11) has different timings for different directions, and the light is selectively let through by controlling the timing of operation of a liquid crystal shutter.

4. A method according to claim 1 or claim 2 wherein the light emitted by said road guide display (11) has different polarities for different directions; and the light is selectively let through by controlling the polarisation of a polarization filter.

5. A method according to claim 3 wherein a synchronising signal is transmitted from a ground station (10) including said road guide display (11) to said route guide apparatus (20), and the timing of operation of the liquid crystal shutter is controlled by said synchronising signal.

6. A method according to claim 3 wherein the timings of the light by said road guide display (11) is controlled by a first clock, and the timings of the operation of the liquid crystal shutter is controlled by a second clock, said first and second clocks being synchronised.

7. A route guide system comprising:
a route guide apparatus (20) for mounting on a vehicle and comprising optical means (24) for providing displayed directions to a driver of the vehicle when the vehicle is in the vicinity of a road junction to provide guidance to a target destination;
**characterised:**
**by** a road guide display (11) for arrangement in the vicinity of said road junction to be visible to the driver to display directions, said road guide display (11) being adapted to emit light of different types for different directions to display said directions; and
in that said route guide apparatus (20) includes control means (22) for controlling said optical means (24) to selectively let through light of one of said different types emitted by said road guide display (11) to be visible to the driver.

8. A route guide system according to claim 7 wherein said road guide display (11) is provided in a ground station (10), the system including transmission means (12) provided in said ground station (10) for transmitting positional information, wherein said route guide apparatus (20) includes receiving means (21) for receiving said positional information and map information storage means (23) for storing map information, and said control means (22) is adapted to control said optical means (24) in dependence upon the received positional information and route guide information obtained from said map information.

9. A route guide system according to claim 7 or claim 8 wherein said road guide display (11) is adapted to emit light having different timings for different directions, said optical means (24) comprises a liquid crystal shutter, and said control means (22) is adapted to control the timing of operation of said liquid crystal shutter (24) to selectively let through the light emitted by said road guide display (11).

10. A route guide system according to claim 9 wherein said liquid crystal shutter is disposed on a front glass of said vehicle.

11. A route guide system according to claim 9 wherein said liquid crystal shutter is formed as glasses wearable by said driver.

12. A route guide system according to any one of claims 9 to 11 wherein said road guide display (11) is provided in a ground station (10), said ground station includes synchronising means for generating a synchronising signal for transmission to said route guide apparatus (20), said control means (22) is adapted to control the timing of operation of said liquid crystal shutter (24) using said synchronising signal, and said road guide display (11) is adapted to synchronise the different timings of the emitted light for different directions using said synchronising signal.

13. A route guide system according to any one of claims 9 to 11 wherein said road guide display (11) is provided in a ground station (10), said ground station (10) includes a first clock for controlling the different timings of the emitted light for different directions, said route guide apparatus (20) includes a second clock for controlling the timing of operation of said liquid crystal shutter, and said first and second clocks are synchronised.

14. A route guide system according to claim 7 or claim 8 wherein said road guide display (11) is adapted to emit light having different polarities for different directions, said optical means (24) comprises a polarizing filter, and said control means (22) is adapted to control the polarization of said polarizing filter to selectively let through the light emitted by said road guide display (11).

15. A route guide system according to claim 14 wherein said polarizing filter is disposed on a front glass of said vehicle.

16. A route guide system according to claim 14 wherein said polarizing filter is formed as glasses wearable by said driver.

17. A road guide station (10) for use in the method of claim 1 with a route guide apparatus (20) provided in a vehicle for displaying directions to a driver of the vehicle, the road guide station comprising:
a road guide display (11) for emitting light of different types for different directions, and transmission means (12) for transmitting positional information to said route guide apparatus (20).

18. A road guide station (10) according to claim 17 wherein said road guide display (11) is adapted to emit light having different timings for different directions.

19. A road guide station (10) according to claim 18 including synchronising means for generating a synchronising signal for transmission to said route guide apparatus for the control thereof, and for controlling the timings of the emitted light for different directions.

20. A road guide station (10) according to claim 18 including a first clock for controlling the different timings of the emitted light for different directions, said first clock being adapted to be synchronised with a second clock provided in said route guide apparatus (20).

21. A road guide station (10) according to claim 17 wherein said road guide display (11) is adapted to emit light having different polarities for different directions.

22. Route guide apparatus for use in the method of claim 1 with a road guide station according to any one of claims 17 to 21 the route guide apparatus being mountable on a vehicle and comprising:
optical means (24) for providing displayed directions to a driver of the vehicle when the vehicle is in the vicinity of a road junction at which said road guide station (10) is provided to provide guidance to a target destination; and
control means (22) for controlling said optical means (24) to selectively let through light of one of different types emitted from said road guide station (11) to be visible to the driver.

23. Route guide apparatus according to claim 22 including receiving means (21) for receiving positional information transmitted from said road guide station (10), and map information storage means (23) for storing map information, wherein said control means (22) is adapted to control said optical means (24) in dependence upon the received positional information and route guide information obtained from said map information.

24. Route guide apparatus according to claim 22 or claim 23 wherein said optical means (24) comprises a liquid crystal shutter, and said control means (22) is adapted to control the timing of operation of said liquid crystal shutter to selectively let through light emitted from said road guide station (10).

25. Route guide apparatus according to claim 24 wherein said liquid crystal shutter (24) is adapted for fitment on a front glass of said vehicle.

26. Route guide apparatus according to claim 24 wherein said liquid crystal shutter (24) is formed as glasses wearable by said driver.

27. Route guide apparatus according to any one of claims 24 to 26 including means for receiving a synchronising signal from said road guide station (10) and said control means is adapted to control the timing of operation of said liquid crystal shutter (24) using said synchronising signal.

28. Route guide apparatus according to any one of claims 24 to 26 including a second clock for controlling the timing of said liquid crystal shutter (24), wherein said second clock is synchronisible with a first clock provided in said road guide station (10).

29. Route guide apparatus according to claim 23 or claim 23 wherein said optical means (24) comprises a polarizing filter, and said control means (22) is adapted to control said polarizing filter to selectively let through light emitted at different polarisations for different directions from said road guide station (10).

30. Route guide apparatus according to claim 29 wherein said polarising filter is adapted for fitment on a front glass of said vehicle.

31. Route guide apparatus according to claim 29 wherein said polarizing filter is formed as glasses wearable by said driver.

## Patentansprüche

1. Verfahren zum Führen eines Fahrzeugs entlang einer Route mit den Schritten
Bereitstellen einer Routenführungsvorrichtung (20) an dem Fahrzeug, und
Verwenden der Routenführungsvorrichtung (20) zum Bereitstellen angezeigter Richtungen für einen Fahrer des Fahrzeugs, wenn das Fahrzeug sich in der Nähe einer Wegkreuzung befindet, um eine Führung zu einem Sollziel bereitzustellen,
**dadurch gekennzeichnet, dass**
eine Wegführungsanzeige (11) in der Nähe der Wegkreuzung angeordnet ist und für den Fahrer sichtbar ist und Richtungen durch Emittieren von Licht verschiedener Arten für verschiedene Richtungen anzeigt, und
die Routenführungsvorrichtung (20) die angezeigten Richtungen dem Fahrer bereitstellt, indem eine optische Einrichtung (24) zum selektiven Durchlassen von durch die Wegführungsanzeige (11) emittierten Licht einer Art aus den verschiedenen Arten gesteuert wird, damit es für den Fahrer sichtbar ist.

2. Verfahren nach Anspruch 1, mit dem Schritt zum Empfangen einer Positionsinformation an der Routenführungsvorrichtung (20) von einer Bodenstation mit der Routenführungsanzeige (11), wobei die dem Fahrer angezeigten Richtungen gemäß der empfangenen Positionsinformation und einer von einer Karteninformation erlangten Routenführungsinformation ausgewählt werden.

3. Verfahren nach Anspruch 1 oder 2, wobei das durch die Wegführungsanzeige (11) emittierte Licht verschiedene Zeitverläufe für verschiedene Richtungen aufweist und das Licht durch Steuern des Zeitverlaufs des Betriebs eines Flüssigkristallverschlusses selektiv durchgelassen wird.

4. Verfahren nach Anspruch 1 oder 2, wobei das durch die Wegführungsanzeige (11) emittierte Licht verschiedene Polaritäten für verschiedene Richtungen aufweist und das Licht durch Steuern der Polarisation eines Polarisationsfilters selektiv durchgelassen wird.

5. Verfahren nach Anspruch 3, wobei ein Synchronisiersignal von einer Bodenstation (10) mit der Wegführungsanzeige (11) zu der Routenführungsvorrichtung (20) übertragen wird und der Zeitverlauf des Betriebs des Flüssigkristallverschlusses durch das Synchronisiersignal gesteuert wird.

6. Verfahren nach Anspruch 3, wobei die Zeitverläufe des Lichts durch die Wegführungsanzeige (11) durch einen ersten Taktgeber gesteuert werden und die Zeitverläufe des Betriebs des Flüssigkristallverschlusses durch einen zweiten Taktgeber gesteuert werden, wobei der erste und der zweite Taktgeber synchronisiert sind.

7. Routenführungssystem mit
einer Routenführungsvorrichtung (20) für eine Anbringung an einem Fahrzeug und mit einer optischen Einrichtung (24) zur Bereitstellung angezeigter Richtungen für einen Fahrer des Fahrzeugs, wenn das Fahrzeug sich in der Nähe einer Wegkreuzung befindet, um eine Führung zu einem Sollziel bereitzustellen,
**gekennzeichnet durch** eine Wegführungsanzeige (11) für eine Anordnung in der Nähe der Wegkreuzung, um für den Fahrer zum Anzeigen von Richtungen sichtbar zu sein, wobei die Wegführungsanzeige (11) zum Emittieren von Licht verschiedener Arten für verschiedene Richtungen zum Anzeigen der Richtungen eingerichtet ist, und
**dadurch**, dass die Routenführungsvorrichtung (20) eine Steuereinrichtung (22) zur dahingehenden Steuerung der optischen Einrichtung (24) beinhaltet, dass **durch** die Wegführungsanzeige (11) emittiertes Licht einer Art aus den verschiedenen Arten selektiv durchgelassen wird, damit es für den Fahrer sichtbar ist.

8. Routenführungssystem nach Anspruch 7, wobei die Wegführungsanzeige (11) an einer Bodenstation (10) vorgesehen ist, das System eine an der Bodenstation (10) vorgesehene Übertragungseinrichtung (12) zum Übertragen einer Positionsinformation beinhaltet, die Routenführungsvorrichtung (20) eine Empfangseinrichtung (21) zum Empfang der Positionsinformation und eine Karteninformationsspeichereinrichtung (22) zum Speichern einer Karteninformation beinhaltet und die Steuereinrichtung (22) zur Steuerung der optischen Einrichtung (24) in Abhängigkeit der empfangenen Positionsinformation und einer aus der Karteninformation erlangten Routenführungsinformation eingerichtet ist.

9. Routenführungssystem nach Anspruch 7 oder 8, wobei die Wegführungsanzeige (11) zum Emittieren von Licht mit verschiedenen Zeitverläufen für verschiedene Richtungen eingerichtet ist, die optische Einrichtung (24) einen Flüssigkristallverschluß beinhaltet und die Steuereinrichtung (22) zur Steuerung des Zeitverlaufs des Betriebs des Flüssigkristallverschlusses (24) zum selektiven Durchlassen des durch die Wegführungsanzeige (11) emittierten Lichts eingerichtet ist.

10. Routenführungssystem nach Anspruch 9, wobei der Flüssigkristallverschluß an einer vorderen Glaseinheit des Fahrzeugs angeordnet ist.

11. Routenführungssystem nach Anspruch 9, wobei der Flüssigkristallverschluß als durch den Fahrer tragbare Gläser ausgebildet ist.

12. Routenführungssystem nach einem der Ansprüche 9 bis 11, wobei die Wegführungsanzeige (11) an einer Bodenstation (10) vorgesehen ist, die Bodenstation eine Synchronisiereinrichtung zur Erzeugung eines Synchronisiersignals zur Übertragung zu der Routenführungsvorrichtung (20) beinhaltet, die Steuereinrichtung (22) zur Steuerung des Zeitverlaufs des Betriebs des Flüssigkristallverschlusses (24) unter Verwendung des Synchronisiersignals eingerichtet ist und die Wegführungsanzeige (11) zur Synchronisation der verschiedenen Zeitverläufe des emittierten Lichts für verschiedene Richtungen unter Verwendung des Synchronisiersignals eingerichtet ist.

13. Routenführungssystem nach einem der Ansprüche 9 bis 11, wobei die Wegführungsanzeige (11) an einer Bodenstation (10) vorgesehen ist, die Bodenstation (10) einen ersten Taktgeber zur Steuerung der verschiedenen Zeitverläufe des emittierten Lichts für verschiedene Richtungen beinhaltet, die Routenführungsvorrichtung (20) einen zweiten Taktgeber zur Steuerung des Zeitverlaufs des Betriebs des Flüssigkristallverschlusses beinhaltet und der erste und der zweite Taktgeber synchronisiert sind.

14. Routenführungssystem nach Anspruch 7 oder 8, wobei die Routenführungsanzeige (11) zum Emittieren von Licht mit verschiedenen Polaritäten für verschiedene Richtungen eingerichtet ist, die optische Einrichtung (24) ein Polarisationsfilter beinhaltet und die Steuereinrichtung (22) zur Steuerung der Polarisation des Polarisationsfilters zum selektiven Durchlassen des durch die Wegführungsanzeige (11) emittierten Lichts eingerichtet ist.

15. Routenführungssystem nach Anspruch 14, wobei das Polarisationsfilter an einer vorderen Glaseinheit des Fahrzeugs angeordnet ist.

16. Routenführungssystem nach Anspruch 14, wobei das Polarisationsfilter als durch den Fahrer tragbare Gläser ausgebildet ist.

17. Wegführungsstation (10) zur Verwendung in dem Verfahren des Anspruchs 1 mit einer an einem Fahrzeug vorgesehenen Routenführungsvorrichtung (20) zum Anzeigen von Richtungen für einen Fahrer des Fahrzeugs, mit
einer Wegführungsanzeige (11) zum Emittieren von Licht verschiedener Arten für verschiedene Richtungen und
einer Übertragungseinrichtung (12) zum Übertragen einer Positionsinformation zu der Routenführungsvorrichtung (20).

18. Wegführungsstation (10) nach Anspruch 17, wobei die Wegführungsanzeige (11) zum Emittieren von Licht mit verschiedenen Zeitverläufen für verschiedene Richtungen eingerichtet ist.

19. Wegführungsstation (10) nach Anspruch 18, mit einer Synchronisiereinrichtung zur Erzeugung eines Synchronisiersignals zur Übertragung zu der Routenführungsvorrichtung für dessen Steuerung und zur Steuerung der Zeitverläufe des emittierten Lichts für verschiedene Richtungen.

20. Wegführungsstation (10) nach Anspruch 18, mit einem ersten Taktgeber zur Steuerung der verschiedenen Zeitverläufe des emittierten Lichts für verschiedene Richtungen, wobei der erste Taktgeber eingerichtet ist, mit einem an der Routenführungsvorrichtung (20) vorgesehenen zweiten Taktgeber synchronisiert zu sein.

21. Wegführungsstation (10) nach Anspruch 17, wobei die Wegführungsanzeige (11) zum Emittieren von Licht mit verschiedenen Polaritäten für verschiedene Richtungen eingerichtet ist.

22. Routenführungsvorrichtung zur Verwendung in dem Verfahren des Anspruchs 1 mit einer Wegführungsstation nach einem der Ansprüche 17 bis 21, wobei die Routenführungsvorrichtung an einem Fahrzeug anbringbar ist, mit
einer optischen Einrichtung (24) zur Bereitstellung angezeigter Richtungen für einen Fahrer des Fahrzeugs, wenn das Fahrzeug sich in der Nähe einer Wegkreuzung befindet, an der die Wegführungsstation (10) vorgesehen ist, um eine Führung zu einem Sollziel bereitzustellen, und
einer Steuereinrichtung (22) zur Steuerung der optischen Einrichtung (24) zum selektiven Durchlassen von von der Wegführungsstation (11) emittierten Licht einer Art aus den verschiedenen Arten, damit es für den Fahrer sichtbar ist.

23. Routenführungsvorrichtung nach Anspruch 22, mit einer Empfangseinrichtung (21) zum Empfang einer von der Wegführungsstation (10) übertragenen Positionsinformation und einer Karteninformationsspeichereinrichtung (23) zur Speicherung einer Karteninformation, wobei die Steuereinrichtung (22) zur Steuerung der optischen Einrichtung (24) in Abhängigkeit der empfangenen Positionsinformation und einer von der Karteninformation erlangten Routenführungsinformation eingerichtet ist.

24. Routenführungsvorrichtung nach Anspruch 22 oder 23, wobei die optische Einrichtung (24) einen Flüssigkristallverschluß beinhaltet und die Steuereinrichtung (22) zur Steuerung des Zeitverlaufs des Betriebs des Flüssigkristallverschlusses (24) zum selektiven Durchlassen von von der Wegführungsstation (10) emittierten Licht eingerichtet ist.

25. Routenführungsvorrichtung nach Anspruch 24, wobei der Flüssigkristallverschluß (24) für eine Befestigung an einer vorderen Glaseinheit des Fahrzeugs eingerichtet ist.

26. Routenführungsvorrichtung nach Anspruch 24, wobei der Flüssigkristallverschluß (24) als durch den Fahrer tragbare Gläser ausgebildet ist.

27. Routenführungsvorrichtung nach einem der Ansprüche 24 bis 26, mit einer Einrichtung zum Empfang eines Synchronisiersignals von der Wegführungsstation (10), wobei die Steuereinrichtung zur Steuerung des Zeitverlauf des Betriebs des Flüssigkristallverschlusses (24) unter Verwendung des Synchronisiersignals eingerichtet ist.

28. Routenführungsvorrichtung nach einem der Ansprüche 24 bis 26, mit einem zweiten Taktgeber zur Steuerung des Zeitverlaufs des Flüssigkristallverschlusses (24), wobei der zweite Taktgeber mit einem an der Wegführungsstation (10) vorgesehenden ersten Taktgeber synchronisierbar ist.

29. Routenführungsvorrichtung nach Anspruch 23, wobei die optische Einrichtung (24) ein Polarisationsfilter aufweist und die Steuereinrichtung (22) zur Steuerung des Polarisationsfilters zum selektiven Durchlassen von Licht eingerichtet ist, das von der Wegführungsstation (10) mit unterschiedlichen Polarisationen für verschiedene Richtungen emittiert wird.

30. Routenführungsvorrichtung nach Anspruch 29, wobei das Polarisationsfilter für eine Befestigung an einer vorderen Glaseinheit des Fahrzeugs eingerichtet ist.

31. Routenführungsvorrichtung nach Anspruch 29, wobei das Polarisationsfilter als durch den Fahrer tragbare Gläser ausgebildet ist.

## Revendications

1. Procédé pour guider un véhicule le long d'une route, le procédé comportant les étapes qui consistent à :
disposer un dispositif (20) de guidage de route dans le véhicule ; et
utiliser le dispositif (20) de guidage de route pour fournir des directions affichées à un conducteur de véhicule lorsque le véhicule est au voisinage d'un croisement de route pour permettre le guidage vers une destination cible ;
**caractérisé en ce que**
un dispositif (11) d'affichage de guidage de route est disposé au voisinage du croisement de routes et visible par le conducteur et affiche des directions en émettant de la lumière de différents types pour différentes directions ; et
le dispositif (20) de guidage de route fournit les directions affichées au conducteur en commandant des moyens (24) optiques pour laisser passer de manière sélective de la lumière d'un type de différents types émis par le dispositif (11) d'affichage de guidage de route pour qu'il soit visible pour le conducteur.

2. Procédé suivant la revendication 1, comportant l'étape qui consiste à recevoir des informations de position dans le dispositif (20) de guidage de route à partir d'une station sur le sol comportant le dispositif (11) d'affichage de guidage de route, les directions affichées au conducteur étant sélectionnées conformément aux informations de position reçues et aux informations de guidage de route obtenues à partir d'informations sur carte.

3. Procédé suivant la revendication 1 ou 2, dans lequel la lumière émise par le dispositif (11) d'affichage de guidage de route a différentes synchronisations pour différentes directions, et on laisse passer la lumière de manière sélective par la commande de la synchronisation du fonctionnement d'un obturateur à cristaux liquides.

4. Procédé suivant la revendication 1 ou 2, dans lequel la lumière émise par le dispositif (11) d'affichage de guidage de route a différentes polarités pour différentes directions ; et on laisse passer la lumière d'une manière sélective en commandant la polarisation d'un filtre de polarisation.

5. Procédé suivant la revendication 3, dans lequel un signal de synchronisation est transmis, à partir d'une station (10) au sol comportant le dispositif (11) d'affichage de guidage de route, au dispositif (20) de guidage de route, et la synchronisation du fonctionnement de l'obturateur à cristaux liquides est commandée par le signal de synchronisation.

6. Procédé suivant la revendication 3, dans lequel les synchronisations de la lumière par le dispositif (11) d'affichage de guidage de route sont commandées par une première horloge et les synchronisations du fonctionnement de l'obturateur à cristaux liquides sont commandées par une seconde horloge, les première et seconde horloges étant synchronisées.

7. Système de guidage de route comportant
un dispositif (20) de guidage de route à monter sur un véhicule et comportant des moyens (24) optiques destinés à fournir des directions affichées à un conducteur du véhicule lorsque le véhicule se trouve au voisinage d'un croisement de routes pour permettre un guidage vers une destination cible ;
**caractérisé par** :
un dispositif (11) d'affichage de guidage de route à disposer au voisinage du croisement de routes de manière à être visible par le conducteur pour afficher des directions, le dispositif (11) d'affichage de guidage de route étant conçu pour émettre de la lumière de différents types pour différentes directions pour afficher les directions ; et
par le fait que le dispositif (20) de guidage de route comporte des moyens (22) de commande destinés à commander les moyens (24) optiques pour laisser passer de manière sélective de la lumière d'un type parmi les différents types émis par le dispositif (11) d'affichage de guidage de route pour être visible par le conducteur.

8. Système de guidage de route suivant la revendication 7, dans lequel le dispositif (11) d'affichage de guidage de route est disposé dans une station (10) au sol, le système comportant des moyens (12) de transmission disposés dans la station (10) au sol pour transmettre des informations de position, le dispositif (20) de guidage de route comportant des moyens (21) de réception destinés à recevoir des informations de position et des informations de carte, des moyens (23) de stockage destinés à stocker des informations de carte, et les moyens (22) de commande sont conçus pour commander les moyens (24) optiques en fonction des informations de position reçues et des informations de guidage de route obtenues des informations de carte.

9. Système de guidage de route suivant la revendication 7 ou 8, dans lequel le dispositif (11) d'affichage de guidage de route est conçu pour émettre de la lumière ayant différentes synchronisations pour différentes directions, les moyens (24) optiques comportant un obturateur à cristaux liquides, et les moyens (22) de commande sont conçus pour commander la synchronisation du fonctionnement de l'obturateur à cristaux liquides pour laisser passer de manière sélective la lumière émise par le dispositif (11) d'affichage de guidage de route.

10. Système de guidage de route suivant la revendication 9, dans lequel l'obturateur à cristaux liquides est disposé sur un pare-brise avant du véhicule.

11. Système de guidage de route suivant la revendication 9, dans lequel l'obturateur à cristaux liquides est formé en tant que lunettes pouvant être portées par le conducteur.

12. Système de guidage de route suivant l'une quelconque des revendications 9 à 11, dans lequel le dispositif (11) d'affichage de guidage de route est disposé dans une station (10) au sol, la station au sol comportant des moyens de synchronisation destinés à produire un signal de synchronisation pour une transmission au dispositif (20) de guidage de route, les moyens (22) de commande étant conçus pour commander la synchronisation du fonctionnement de l'obturateur (24) à cristaux liquides en utilisant le signal de synchronisation, et le dispositif (11) d'affichage de guidage de route est conçu pour synchroniser les différentes synchronisations de la lumière émise pour différentes directions en utilisant le signal de synchronisation.

13. Système de guidage de route suivant l'une quelconque des revendications 9 à 11, dans lequel le dispositif (11) d'affichage de guidage de route est disposé dans une station (10) au sol, la station (10) au sol comportant une première horloge destinée à commander les différentes synchronisations de la lumière émise pour différentes directions, le dispositif (20) de guidage de route comportant une seconde horloge destinée à commander la synchronisation du fonctionnement de l'obturateur à cristaux liquides, et les première et seconde horloges étant synchronisées.

14. Système de guidage de route suivant la revendication 7 ou 8, dans lequel le dispositif (11) d'affichage de guidage de route est conçu pour émettre de la lumière ayant différentes polarités pour différentes directions, les moyens (24) optiques comportant un filtre de polarisation, et les moyens (22) de commande sont conçus pour commander la polarisation du filtre de polarisation pour laisser passer de manière sélective la lumière émise par le dispositif (11) d'affichage de guidage de route.

15. Système de guidage de route suivant la revendication 14, dans lequel le filtre de polarisation est disposé sur un pare-brise avant du véhicule.

16. Système de guidage de route suivant la revendication 14, dans lequel le filtre de polarisation est formé sous la forme de lunettes pouvant être portées par le conducteur.

17. Station (10) de guidage de route pour utilisation dans le procédé suivant la revendication 1 avec un dispositif (20) de guidage de route disposé dans un véhicule pour afficher des directions à un conducteur du véhicule, le poste de guidage de route comportant :
un dispositif (11) d'affichage de guidage de route pour émettre de la lumière de différents types pour différentes directions, et des moyens (12) de transmission destinés à transmettre des informations de position au dispositif (20) de guidage de route.

18. Station (10) de guidage de route suivant la revendication 17, dans lequel le dispositif (11) d'affichage de guidage de route est conçu pour émettre de la lumière ayant différentes synchronisations pour différentes directions.

19. Station (10) de guidage de route suivant la revendication 18, comportant des moyens de synchronisation destinés à produire un signal de synchronisation pour la transmission au dispositif de guidage de route pour sa commande, et destinés à commander les synchronisations de la lumière émise pour différentes directions.

20. Station (10) de guidage de route suivant la direction 18, comportant une première horloge destinée à commander les différentes synchronisations de la lumière émise pour différentes directions, la première horloge étant conçue pour être synchronisée avec une seconde horloge disposée dans le dispositif (20) de guidage de route.

21. Station (10) de guidage de route suivant la revendication 17, dans lequel le dispositif (11) d'affichage de guidage de route est conçu pour émettre de la lumière ayant différentes polarités pour différentes directions.

22. Dispositif de guidage de route pour l'utilisation dans le procédé suivant la revendication 1 avec une station de guidage de route suivant l'une quelconque des revendications 17 à 21, le dispositif de guidage de route pouvant être monté sur un véhicule et comportant :
des moyens (24) optiques destinés à fournir des directions affichées à un conducteur du véhicule lorsque le véhicule est au voisinage d'un croisement de routes où la station (10) de guidage de route est disposée pour permettre un guidage vers une destination cible ; et
des moyens (22) de commande destinés à commander les moyens (24) optiques pour laisser de manière sélective de la lumière d'un type parmi différents types émis de la station (11) de guidage de route pour être visible par le conducteur.

23. Dispositif de guidage de route suivant la revendication 22, comportant des moyens (21) de réception pour recevoir des informations de position transmises à partir de la station (10) de guidage de route, et des moyens (23) de stockage d'informations de carte pour stocker des informations de carte, dans lequel les moyens (22) de commande sont conçus pour commander les moyens (24) optiques en fonction des informations de position reçues et des informations de guidage de route obtenues à partir des informations de carte.

24. Dispositif de guidage de route suivant la revendication 22 ou 23, dans lequel les moyens (24) optiques comportent un obturateur à cristaux liquides, et les moyens (22) de commande sont conçus pour commander la synchronisation de fonctionnement de l'obturateur à cristaux liquides pour laisser passer de manière sélective de la lumière émise à partir de la station (10) de guidage de route.

25. Dispositif de guidage de route suivant la revendication 24, dans lequel l'obturateur (24)à cristaux liquides est conçu pour une adaptation sur un pare-brise avant du véhicule.

26. Dispositif de guidage de route suivant la revendication 24, dans lequel l'obturateur à cristaux liquides est formé sous la forme de lunettes pouvant être portées par le conducteur.

27. Dispositif de guidage de route suivant l'une quelconque des revendications 24 à 26, comportant des moyens destinés à recevoir un signal de synchronisation à partir de la station (10) de guidage de route et les moyens de commande sont conçus pour commander la synchronisation de fonctionnement de l'obturateur (24) à cristaux liquides en utilisant le signal de synchronisation.

28. Dispositif de guidage de route suivant l'une quelconque des revendications 24 à 26, comportant une seconde horloge destinée à commander la synchronisation de l'obturateur (24) à cristaux liquides, dans lequel la seconde horloge peut être synchronisée avec une première horloge disposée dans la station (10) de guidage de route.

29. Dispositif de guidage de route suivant la revendication 23 ou 24, dans lequel les moyens (24) optiques comportent un filtre de polarisation, et les moyens (22) de commande sont conçus pour commander le filtre de polarisation pour laisser passer de manière sélective de la lumière émise à différentes polarisations pour différentes directions en provenance du poste (10) de guidage de route.

30. Dispositif de guidage de route suivant la revendication 29, dans lequel le filtre de polarisation en conçu pour une adaptation sur un pare-brise avant du véhicule.

31. Dispositif de guidage de route suivant la revendication 29, dans lequel le filtre de polarisation est formé sous la forme de lunettes pouvant être portées par le conducteur.
